# FASCICULE DE BREVET EUROPEEN

(11) **EP 2 776 243 B1**
(45) Date de publication et mention de la délivrance du brevet: **30.12.2015**
(21) Numéro de dépôt: 12794422.1
(22) Date de dépôt: 31.10.2012
(51) Int. Cl.: B32B 17/10, B60J 1/08

(54) **VEHICULE AUTOMOBILE AVEC VITRAGE REPETITEUR DE CLIGNOTANT**
KRAFTFAHRZEUG MIT SIGNALREGENERATORVERGLASUNG
MOTOR VEHICLE WITH TURN SIGNAL REPEATER GLAZING

(30) Priorité: 07.11.2011 FR 1160054
(43) Date de publication de la demande: 17.09.2014
(73) Titulaire: Saint-Gobain Glass France, 92400 Courbevoie (FR)
(72) Inventeur: MASSAULT, Laetitia, 60280 Magny Les Compiegne (FR); VERRAT-DEBAILLEUL, Adèle, 60150 Villers-sur-Coudun (FR); BAUERLE, Pascal, 80700 Roye (FR); MILHE POUTINGON, Sophie, 60300 Senlis (FR)
(74) Mandataire: Pöpping, Barbara
(86) Numéro de dépôt international: PCT/FR2012/052525
(87) Numéro de publication internationale: WO 2013/068679

(56) Documents cités:
- EP-A1- 1 234 752
- WO-A1-2004/082934
- DE-A1-102008 004 049
- FR-A1- 2 948 609
- US-A1- 2006 209 551

## Description

La présente invention concerne un véhicule automobile avec un vitrage latéral remplissant la fonction de répétiteur de clignotant.

Dans le domaine automobile, il est connu de doubler certains feux de signalisation tels que les feux arrière, feux indicateur de direction, feux stop ou feux de marche arrière, par des sources lumineuses synchronisées avec ces feux de signalisation et de même couleur que ceux-ci. Ces sources lumineuses peuvent être placées au niveau de la carrosserie ou bien à l'intérieur de l'habitacle. Dans le cas d'un répétiteur de clignotant, celui-ci peut également être incorporé dans le rétroviseur latéral du véhicule.

Un tel doublement d'une partie des feux de signalisation implique une ou plusieurs pièces supplémentaires à gérer dans la chaîne de fabrication et augmente par conséquent les coûts de production. Par ailleurs, ces feux de signalisation additionnels, « rapportés », ne sont pas toujours totalement satisfaisant d'un point de vue esthétique.

La présente invention est basée sur l'idée d'incorporer la fonction de répétiteur de clignotant directement dans un vitrage latéral du véhicule, de préférence dans les vitres latérales fixes avant du véhicule.

Une telle incorporation de sources lumineuses supplémentaires clignotantes au niveau des vitres d'une voiture pose toutefois de sérieux problèmes de sécurité routière.

En effet, la lumière émise par les feux indicateurs de direction (clignotants et répétiteurs de clignotant) doit être visible uniquement du côté où est situé le feu indicateur de direction en question. Si de la lumière était émise par des vitres vers l'intérieur du véhicule, elle risquerait d'être visible, par transparence, également à l'extérieur de celui-ci. Le clignotement du répétiteur de clignotant gauche, par exemple, pourrait alors être interprété, dans certaines situations par le conducteur d'un autre véhicule, comme provenant du côté droit, et inversement.

On comprendra également que la perception, par le conducteur, des feux indicateur de direction de sa propre voiture pourrait être très gênante dans certaines situations, notamment pendant la conduite de nuit ou lorsque cette lumière est reflétée sur des vitrages ou autres surfaces réfléchissantes à l'intérieur du véhicule.

Pour être homologués, de tels vitrages répétiteurs de clignotant doivent donc comporter des éléments de masquage empêchant la lumière de pénétrer vers l'intérieur de l'habitacle, de préférence sans réduire excessivement ou indésirablement le clair de vitre.

La présente demande propose un véhicule avec un répétiteur de clignotant sous forme de vitre latérale où ces objectifs techniques et de sécurité ont été atteints grâce à des moyens techniques relativement simples, peu coûteux et très satisfaisants d'un point de vue esthétique.

La présente demande a par conséquent pour objet un véhicule automobile comportant au moins un vitrage latéral capable de fonctionner en tant que feu indicateur de direction du véhicule, ledit vitrage comprenant
- une première feuille transparente, en verre minéral ou organique, avec une première face principale dirigée vers l'extérieur du véhicule, une deuxième face principale dirigée vers l'intérieur du véhicule, et une tranche,
- une ou plusieurs sources lumineuses, de préférence des diodes électroluminescentes (LED), présentant chacune une face émettrice de lumière en regard de la tranche, la lumière émise par les sources lumineuses étant ainsi guidée dans la première feuille entre la première et la deuxième face principale de celle-ci, les sources lumineuses étant raccordées de manière à permettre l'émission d'une lumière clignotante, synchronisée avec le clignotement des autres feux indicateurs de direction du véhicule,
- un moyen d'extraction de la lumière au niveau d'au moins une zone de la première face principale ou de la deuxième face principale de la première feuille ou situé dans l'épaisseur de la première feuille, ledit moyen d'extraction émettant, lorsqu'il est éclairé par les sources lumineuses, une lumière jaune auto, et
- un moyen d'opacification situé vers l'intérieur du véhicule par rapport au moyen d'extraction de la lumière et masquant totalement le moyen d'extraction de la lumière de manière à le rendre invisible depuis l'intérieur du véhicule.

Le vitrage du véhicule automobile de la présente invention peut être un vitrage simple ou un vitrage feuilleté comportant au moins deux feuilles simples collées l'une à l'autre de manière connue au moyen d'un intercalaire de feuilletage. Il est important de noter que, dans la description ci-après du vitrage, le terme « première feuille » désignera toujours la feuille de verre éclairée au niveau de sa tranche par la ou les sources lumineuses, indépendamment de sa position respective par rapport à la deuxième feuille. Autrement dit, la première feuille (feuille « éclairée ») peut être celle en contact avec l'extérieur ou avec l'intérieur du véhicule, et peut être doublée d'une deuxième feuille sur sa face orientée respectivement vers l'intérieur ou vers l'extérieur du véhicule.

Bien entendu, lorsque le vitrage est un vitrage simple, la « première feuille » est l'unique feuille en verre du vitrage.

Lorsque le vitrage est un vitrage feuilleté, il comporte, en plus de la première feuille, une deuxième feuille transparente, également en verre organique ou minéral, avec une première face principale dirigée vers l'extérieur du véhicule, et une deuxième face principale dirigée vers l'intérieur du véhicule, ladite deuxième feuille étant fixée à la première feuille au moyen d'un intercalaire de feuilletage transparent. Cet intercalaire de feuilletage est en contact adhésif
(a) soit avec la deuxième face principale de la première feuille et la première face principale de la deuxième feuille,
(b) soit avec la première face principale de la première feuille et la deuxième face principale de la deuxième feuille.

Dans la variante (a), la feuille éclairée par sa tranche (première feuille) est la feuille en contact avec l'atmosphère extérieure. Cette variante présente l'avantage d'un bon rendement lumineux du vitrage car la lumière émise vers l'extérieur ne sera aucunement absorbée par l'intercalaire ou la deuxième feuille. Elle présente toutefois l'inconvénient que des rayures ou salissures, éventuellement présentes sur la première face principale de la première feuille (face extérieure du vitrage), seront fortement visibles lorsqu'elles sont éclairées par les LED situées sur la tranche de la première feuille.

C'est la raison pour laquelle la variante (b), correspondant au mode de réalisation où la feuille éclairée est celle qui est en contact avec l'atmosphère de l'habitacle du véhicule, sera généralement préférée par rapport à la variante (a), en dépit d'une réduction potentielle du rendement lumineux. Dans ce mode de réalisation préféré, la deuxième feuille est fixée à la première feuille au moyen de l'intercalaire de feuilletage qui est en contact adhésif avec la première face principale de la première feuille et la deuxième face principale de la deuxième feuille, et le moyen d'extraction de la lumière est de préférence sur la première face principale de la première feuille et le moyen d'opacification sur la deuxième face principale de la première feuille.

Les première et deuxième feuilles peuvent être en verre organique, par exemple en polycarbonate, du polyuréthanne, du poly(méthacrylate de méthyle) ou en polyoléfines. Les feuilles de verre organique ont typiquement une épaisseur comprise entre 1 et 6 mm.

On utilisera toutefois de préférence un verre minéral, pour les vitrages simples en particulier un verre trempé.

La première feuille sera de préférence en verre minéral sodo-calcique incolore tel que le verre Planilux^{®} commercialisé par la Demanderesse. Elle a typiquement une épaisseur comprise entre 2,5 et 6 mm lorsqu'il s'agit d'un vitrage simple, et une épaisseur comprise entre 1,4 et 3,2, de préférence entre 1,4 et 2,1 mm lorsqu'il s'agit d'un vitrage feuilleté.

Lorsque la deuxième feuille est collée sur la face extérieure de la première feuille, elle est de préférence aussi transparente et incolore que la première feuille. Dans un mode de réalisation préféré, un vitrage feuilleté selon l'invention sera constitué de deux feuilles Planilux^{®} incolores, réunies au moyen d'un intercalaire de feuilletage teinté.

Lorsqu'elle est collée sur la face intérieure de la première feuille, elle peut, au contraire, être en verre teinté, par exemple en verre Vénus^{®}, TSA3+ ou TSA4+ également commercialisés par la Demanderesse. Bien que le feuilletage de deux feuilles de teintes différentes pose, pour l'instant, différents inconvénients liés au procédé verrier, ce mode de réalisation pourrait devenir très intéressant lorsque ces problèmes seront surmontés.

La deuxième feuille a typiquement une épaisseur comprise entre 1,4 et 2,1 mm.

L'intercalaire peut être constitué de n'importe quel matériau polymère couramment utilisé pour cette fonction. On peut mentionner à titre d'exemple de tels matériaux le poly(butyral de vinyle) (PVB), le polyuréthanne plastifié et les copolymères d'éthylène et d'acétate de vinyle (EVA), éventuellement partiellement hydrolysés. Il a typiquement une épaisseur comprise entre 0,2 et 1,1 mm et peut être incolore ou teinté.

La lumière émise par les sources lumineuses entre par la tranche de la première feuille qui joue un rôle de guide d'onde. Pour « extraire » la lumière de ce guide d'onde, il existe de nombreux moyens d'extraction, familières à l'homme du métier et communément utilisés dans le domaine des vitrages.

Le moyen d'extraction de la lumière peut être, par exemple, une zone dépolie de la première feuille ou bien un revêtement diffusant appliqué sur l'une des faces principales de la première feuille ou bien sur la face de l'intercalaire de feuilletage en contact avec la première feuille. Il peut également s'agir d'une zone gravée dans l'épaisseur de la première feuille ou encore d'éléments diffusants, tels que des particules ou fibres de verre, incorporés dans l'intercalaire.

On peut utiliser en tant que revêtement diffusant n'importe quel revêtement diffusant couramment utilisé dans le domaine du vitrage. Un tel revêtement comprend généralement des particules ayant une taille de l'ordre du micromètre et un liant, organique ou minéral, permettant de faire adhérer ces particules à la surface du verre. Les particules peuvent être en métal ou en oxyde métallique. Leur taille moyenne est typiquement comprise entre 50 nm et 1 micromètre. Un revêtement diffusant approprié est décrit par exemple dans la demande internationale WO 01/90787.

Le moyen d'opacification peut être n'importe quel moyen permettant d'interposer un écran ou une barrière opaque entre le moyen d'extraction de la lumière et l'intérieur du véhicule. Il peut s'agir d'une plaque ou d'un film en matière plastique, collés sur la face intérieur du vitrage. Dans un mode de réalisation préféré de l'invention, le moyen d'opacification est une couche opaque, formée d'émail ou d'encre, et qui est en contact avec au moins une des faces principales de la feuille ou d'une des feuilles du vitrage. Cette couche opaque peut être déposée sur une des faces principales des feuilles, mais également sur une des faces de l'intercalaire de feuilletage.

Dans un mode de réalisation de la présente invention, la couche opaque de masquage est en émail. L'homme du métier est familier avec l'application d'émaux opaques, généralement de couleur noire, au niveau des bords de vitrages automobiles.

Pour la fabrication de deux couches congrues, l'une de couleur claire (moyen d'extraction de la lumière) et l'autre de couleur plus foncée, voire noire (couche opaque), on pourra se référer à la demande US2006/0150680. La demande EP0636588 décrit la fabrication d'émaux métallisés qui, du fait de leur caractère réfléchissant, peuvent être particulièrement intéressants pour la présente invention.

Dans un autre mode de réalisation du vitrage de la présente invention, la couche opaque de masquage est constituée d'encre. Cette encre n'ayant généralement pas besoin d'être soumise à des températures aussi élevées que l'émail, l'utilisation d'une encre permet des possibilités d'application supplémentaires. En effet, l'encre peut être appliquée par impression, par exemple par sérigraphie, sur l'une des faces principales de la première ou de la deuxième feuille, mais elle peut également être appliquée sur l'une des faces de l'intercalaire de feuilletage qui se trouvera, après assemblage, en contact direct avec l'une des faces principales des feuilles de verre.

Les encres noires pour l'impression de verre sont familières à l'homme du métier. L'impression de l'intercalaire de feuilletage avec des encres noires est décrite par exemple dans la demande française déposée par la Demanderesse le 12 avril 2011 sous le numéro 11 53189.

Différentes configurations pour le moyen d'extraction de la lumière et le moyen d'opacification sont envisageables. Ces deux éléments essentiels pour l'invention peuvent être en contact l'un avec l'autre, ou bien ils peuvent être séparés par exemple par une des feuilles de verre et/ou par l'intercalaire de feuilletage. Dans tous les cas, la couche opaque de masquage est bien entendu située plus vers l'intérieur du véhicule que le moyen d'extraction, faute de quoi elle ne pourrait pas jouer le rôle d'écran à la lumière.

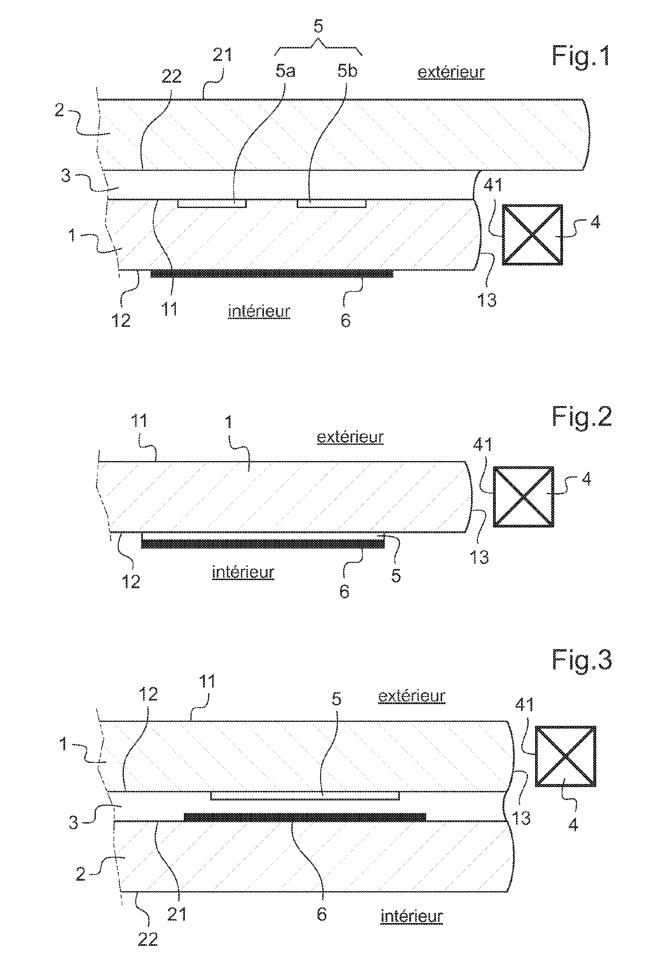

Dans un mode de réalisation, représenté à la figure 2, le moyen d'extraction de la lumière est sur la deuxième face principale de la première feuille, et le moyen d'opacification est directement en contact avec le moyen d'extraction de la lumière et le recouvre totalement.

Le moyen d'opacification peut être de même taille et forme que le moyen d'extraction et se superposer parfaitement à celui-ci, ou bien il peut être plus grand que ce dernier et dépasser la limite de celui-ci. Dans un mode de réalisation préféré, les deux couches (moyen d'extraction et moyen d'opacification) sont déposées l'une au dessus de l'autre sur la deuxième face principale de la première feuille.

On peut toutefois également envisager le dépôt du moyen d'extraction de la lumière sur la deuxième face de la première feuille et le dépôt d'une encre opaque (moyen d'opacification) sur au moins une des faces d'un éventuel intercalaire de feuilletage qui sera ensuite mis en contact avec la première feuille de manière à ce que ces deux dépôts soient superposés.

Dans un deuxième mode de réalisation du vitrage de la présente invention, représenté à la figure 1, le moyen d'extraction de la lumière est sur la première face principale de la première feuille et le moyen d'opacification est sur la deuxième face principale de la première feuille. Dans ce mode de réalisation où la couche opaque n'est pas directement en contact avec le moyen d'extraction de la lumière, le décalage entre ces deux couches (épaisseur de la première feuille) risque de réduire l'efficacité de masquage de la lumière par la couche opaque. Dans ce mode de réalisation il est par conséquent particulièrement intéressant que l'étendue de la couche opaque soit plus importante que celle du moyen d'extraction et dépasse ce dernier sur tout son pourtour.

Encore un autre mode de réalisation du vitrage de la présente invention, représenté à la figure 3, concerne uniquement les vitrages feuilletés. Dans ce mode de réalisation la feuille éclairée (= première feuille) est la feuille en contact avec l'atmosphère extérieure, c'est-à-dire la deuxième feuille est fixée à la première feuille au moyen de l'intercalaire de feuilletage qui est en contact adhésif avec la deuxième face de la première feuille et la première face principale de la deuxième feuille, et le moyen d'extraction de la lumière est sur au moins une des faces principales de la première feuille et le moyen d'opacification sur au moins une des faces principales de la deuxième feuille. Comme pour le mode de réalisation représenté à la figure 1, il est ici particulièrement intéressant que l'étendue de la couche d'opacification soit plus importante que celle du moyen d'extraction et dépasse ce dernier sur tout son pourtour.

Enfin, un dernier mode de réalisation intéressant est caractérisé par le fait que la deuxième feuille est fixée à la première feuille au moyen de l'intercalaire de feuilletage qui est en contact adhésif avec la première face principale de la première feuille et la deuxième face principale de la deuxième feuille, et le moyen d'extraction de la lumière est sur la première face principale de la première feuille et le moyen d'opacification sur la deuxième face principale de cette première feuille.

Le moyen d'extraction de la lumière peut prendre la forme d'une zone unique continue, d'une forme quelconque, ou bien il peut être appliqué sur plusieurs zones distinctes de la première ou deuxième face principale de la première feuille. Il en va bien entendu de même du moyen d'opacification qui peut être une zone unique ou être composé de plusieurs zones distinctes. Lorsque le moyen d'extraction est présent sous forme de plusieurs zones distinctes, le moyen d'opacification peut être une zone unique englobant l'ensemble de ces zones, comme illustré à la figure 1.

Comme expliqué ci-dessus, lorsque le moyen d'opacification n'est pas directement en contact avec le moyen d'extraction, il a de préférence une étendue plus importante que ce dernier. De manière générale, l'étendue totale de la zone ou des zones couvertes par le moyen d'opacification est supérieure d'au moins 5 %, de préférence d'au moins 10 % et en particulier d'au moins 20 %, à l'étendue totale de la zone ou des zones couvertes par le moyen d'extraction de la lumière.

Par contre, lorsque ces deux couches sont en contact l'une avec l'autre, elles peuvent être congrues (c'est-à-dire de même forme et taille) et superposées l'une à l'autre.

Il est en principe tout à fait envisageable que toute la surface du vitrage répétiteur de clignotant soit couverte d'une couche opaque, sous réserve, bien entendu, que le vitrage ne vienne pas s'interposer entre le regard du conducteur et l'un des rétroviseurs latéraux. Toutefois, dans un mode de réalisation préféré, le vitrage comporte au moins une zone transparente, appelée « clair de vitre », non couverte par la couche opaque.

Ce clair de vitre représente généralement au moins 20 %, de préférence au moins 50 % et en particulier au moins 70 % de la surface totale du vitrage, y compris les zones couvertes par l'encapsulation ou les joints. Autrement dit, la couche opaque couvre une zone qui représente généralement au plus 80 %, de préférence au plus 50 % et en particulier au plus 30 % de la surface totale du vitrage.

Comme il a été mentionné ci-avant, l'émail et l'encre formant le moyen d'opacification peuvent être à la fois réfléchissants et opaques. Lorsqu'ils ne sont pas réfléchissants et absorbent la plus grande partie de la lumière, il peut être avantageux, pour des raisons évidentes de rendement lumineux, d'interposer entre le moyen d'extraction de la lumière et le moyen d'opacification une couche réfléchissante, de préférence une mince couche métallique.

On entend par « couche opaque » dans la présente demande une couche ayant une densité optique au moins égale à 2. La densité optique de la couche opaque est de préférence comprise entre 2,5 et 5, plus préférentiellement entre 2,8 et 4,5 et en particulier entre 3 et 4.

Lorsque la couche opaque est doublée, sur sa face tournée vers le moyen d'extraction de la lumière, d'une couche réfléchissante, par exemple d'une mince couche métallique, il est suffisant que l'ensemble de ces deux couches présente les densités optiques ci-dessus.

Le vitrage répétiteur de clignotant selon l'invention émet une lumière de couleur jaune auto (voir Directive du Conseil n° 76/759/CEE du 27 juin 1976, Annexe V). Il est situé au niveau d'une vitre latérale (feu indicateur de direction de catégorie 5), de préférence d'une vitre latérale fixe telle que le déflecteur ou la custode, en particulier d'un vitrage latéral fixe avant (custode).

La couleur jaune auto de la lumière émise par le vitrage, et plus précisément par le moyen d'extraction de la lumière, peut être obtenue, entre autres,
- grâce des sources lumineuses émettant une lumière jaune auto,
- grâce à une première feuille teintée (guide d'onde de la lumière reçue des sources lumineuses),
- grâce à un intercalaire de feuilletage teinté en contact adhésif avec la première face de la première feuille, ou
- grâce à un moyen d'extraction de la lumière de couleur, jaune, orange ou jaune auto.

On peut citer à titre d'exemples de modes de réalisation préférés les suivants :
LED de couleur jaune auto en combinaison avec une première feuille non teintée et un matériau d'extraction blanc ;
LED de couleur jaune auto en combinaison avec une première feuille non teintée et un matériau d'extraction orange ou jaune ;
LED de couleur blanche en combinaison avec une première feuille non teintée et un matériau d'extraction orange ou jaune.

On pourra également envisager l'utilisation de LED émettant un rayonnement UV en combinaison avec un matériau d'extraction de type luminophore fluorescent.

Bien entendu les sources lumineuses devront avoir un système d'alimentation électrique, autonome ou rattaché au système électrique de la voiture. Les sources lumineuses devront par ailleurs être configurées de manière à pouvoir recevoir des signaux de commande régissant leur allumage/extinction.

Pour garantir une puissance lumineuse satisfaisante, comprise entre 0,3 et 200 cd vue depuis un angle compris entre 5 et 55 ° par rapport à l'axe de référence du véhicule (voir directive n° 76/759/CEE), les faces émettrices des sources lumineuses sont de préférence en regard de la tranche de la première feuille positionnée vers l'avant du véhicule.

La présente invention sera décrite maintenant en référence aux figures annexées dans lesquelles
la figure 1 est une représentation schématique en coupe transversale d'un premier mode de réalisation d'un vitrage selon l'invention,
la figure 2 est une représentation schématique en coupe transversale d'un deuxième mode de réalisation d'un vitrage selon l'invention et
la figure 3 est une représentation schématique en coupe transversale d'un troisième mode de réalisation, et
les figures 4a et 4b sont une illustration d'un vitrage latéral avant fixe jouant le rôle de répétiteur de clignotant.

Plus particulièrement, la figure 1 montre le bord d'un vitrage feuilleté, en coupe transversale. Une deuxième feuille 2, en contact *via* sa première surface principale 21 avec l'atmosphère extérieure, est collée par l'intermédiaire d'un intercalaire de feuilletage 3 à une première feuille 1, éclairée par sa tranche 13. L'intercalaire de feuilletage est en contact adhésif avec la deuxième face principale 22 de la deuxième feuille et avec la première face principale 11 de la première feuille. La deuxième face principale 12 de la première feuille 1 est en contact avec l'atmosphère intérieure du véhicule. Une diode électroluminescente (LED) 4 est positionnée à proximité de la tranche 13 de la première feuille 1, sa face émettrice 41 étant en regard de cette tranche. Le moyen d'extraction de la lumière 5 est ici constitué de deux zones 5a, 5b gravées dans la surface de la première face principale 11 de la première feuille 1. La couche opaque 6, un émail appliqué sur la deuxième face principale 12 de la première feuille, a une étendue beaucoup plus importante que les deux zones gravées 5a,5b et couvre une zone qui englobe ces deux zones individuelles.

La figure 2 montre le bord d'un vitrage simple selon l'invention en coupe transversale. Le vitrage comporte une feuille unique 1, appelée première feuille, avec une première face principale 11 en contact avec l'atmosphère extérieure, une deuxième face principale 12 en contact avec l'intérieur du véhicule, et une tranche 13. La face émettrice 41 d'une LED 4 est en regard de la tranche 13. Le moyen d'extraction de la lumière 5 est en contact direct avec la deuxième face principale 12 de la feuille 1. Le moyen d'extraction 5 est couvert, sur toute sa surface, d'une couche opaque 6. Celle-ci a exactement la même forme et taille que le moyen d'extraction de la lumière 5 et se superpose à celui-ci sans toutefois le dépasser.

La figure 3 montre un mode de réalisation où le moyen d'extraction de la lumière 5 et le moyen d'opacification 6 sont sur deux feuilles différentes d'un vitrage feuilleté. Le moyen d'extraction est situé sur la deuxième face principale 12 de la première feuille 1, éclairée par la LED 4. Le moyen d'opacification 6 est en contact avec la première face principale 21 de la deuxième feuille 2 et également avec l'intercalaire de feuilletage 3. La couche opaque 6 peut être formée d'un émail ou d'une encre opaque déposés sur la face 21, ou bien peut-être une couche d'encre imprimée sur l'intercalaire de feuilletage 3. Comme pour la figure 1, la séparation dans l'espace du moyen d'extraction de la lumière 5 et de la couche opaque 6 justifie un dimensionnement plus important de la couche opaque 6, par rapport au moyen d'extraction 5.

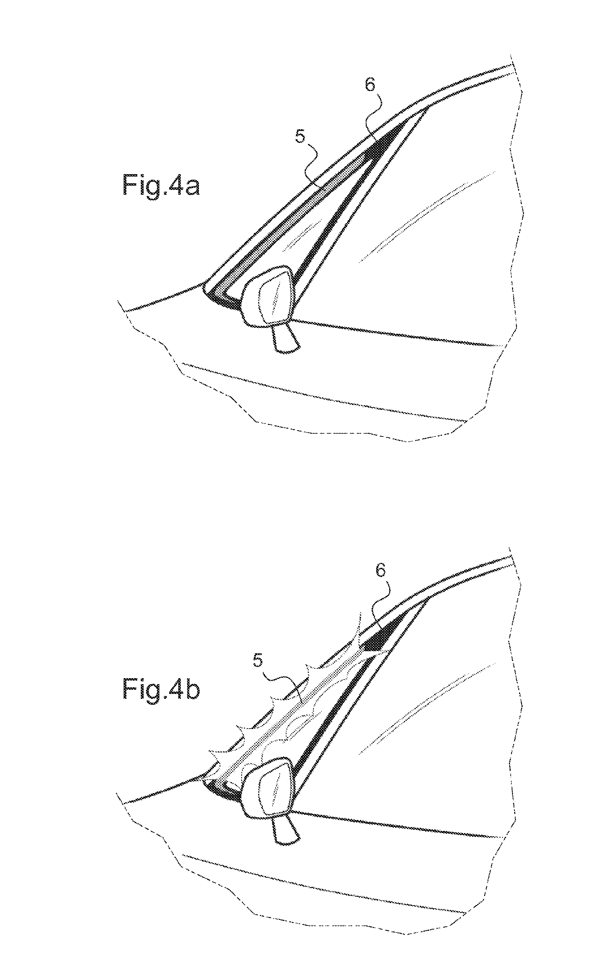

Les figures 4a et 4b illustrent un répétiteur de clignotant, sous forme d'une vitre latérale avant fixe d'un véhicule automobile, respectivement à l'état éteint et allumé. Les sources lumineuses, non représentées, se trouvent en regard de la tranche de la vitre, positionnée vers l'avant du véhicule. Le moyen d'extraction de la lumière 5 est une unique zone de forme allongée à proximité des sources lumineuses. Un moyen d'opacification 6, d'une étendue plus importante que le moyen d'extraction, empêche efficacement la lumière diffusée par le moyen d'extraction de pénétrer à l'intérieur du véhicule.

## Revendications

1. Véhicule automobile comportant au moins un vitrage latéral capable de fonctionner en tant que feu indicateur de direction du véhicule, ledit vitrage comprenant
- une première feuille (1) transparente, en verre minéral ou organique, avec une première face principale (11) dirigée vers l'extérieur du véhicule, une deuxième face principale (12) dirigée vers l'intérieur du véhicule, et une tranche (13),
- une ou plusieurs sources lumineuses (4), de préférence des diodes électroluminescentes, présentant chacune une face émettrice de lumière (41) en regard de la tranche (13), la lumière émise par les sources lumineuses (4) étant ainsi guidée dans la première feuille (1) entre la première et la deuxième face principale de celle-ci, les sources lumineuses (4) étant raccordées de manière à permettre l'émission d'une lumière clignotante, synchronisée avec le clignotement des autres feux indicateurs de direction du véhicule,
- un moyen d'extraction de la lumière (5) au niveau d'au moins une zone de la première face principale (11) ou de la deuxième face principale (12) de la première feuille ou situé dans l'épaisseur de la première feuille (1), ledit moyen d'extraction (5) émettant, lorsqu'il est éclairé par les sources lumineuses (4), une lumière jaune auto, et
- un moyen d'opacification (6) situé vers l'intérieur du véhicule par rapport au moyen d'extraction de la lumière (5) et masquant totalement le moyen d'extraction de la lumière (5) de manière à le rendre invisible depuis l'intérieur du véhicule.

2. Véhicule selon la revendication 1, **caractérisé par le fait que** le moyen d'opacification (6) est en contact avec au moins une des faces principales de la feuille ou d'une des feuilles du vitrage.

3. Véhicule selon la revendication 1 ou 2, **caractérisé par le fait que** le vitrage latéral comporte en outre une deuxième feuille (2) transparente, en verre minéral ou organique, avec une première face principale (21) dirigée vers l'extérieur du véhicule, et une deuxième face principale (22) dirigée vers l'intérieur du véhicule, ladite deuxième feuille (2) étant fixée à la première feuille (1) au moyen d'un intercalaire de feuilletage (3) transparent en contact adhésif
- soit avec la deuxième face principale (12) de la première feuille et la première face principale (21) de la deuxième feuille,
- soit avec la première face principale (11) de la première feuille et la deuxième face principale (22) de la deuxième feuille.

4. Véhicule selon l'une quelconque des revendications 1 à 3, **caractérisé par le fait que** le moyen d'extraction de la lumière (5) est sur la deuxième face principale (12) de la première feuille (1), et le moyen d'opacification (6) est directement en contact avec le moyen d'extraction de la lumière (5) en le recouvrant totalement, de préférence en dépassant la limite de celui-ci.

5. Véhicule selon l'une quelconque des revendications 1 à 3, **caractérisé par le fait que** le moyen d'extraction de la lumière (5) est sur la première face principale (11) de la première feuille et le moyen d'opacification (6) est sur la deuxième face principale (12) de la première feuille.

6. Véhicule selon la revendication 3, **caractérisé par le fait que** la deuxième feuille (2) est fixée à la première feuille (1) au moyen de l'intercalaire de feuilletage (3) qui est en contact adhésif avec la deuxième face (12) de la première feuille et la première face principale (21) de la deuxième feuille, et que le moyen d'extraction de la lumière (5) est sur au moins une des faces principales (11, 12) de la première feuille (1) et le moyen d'opacification (6) sur au moins une des faces principales (21,22) de la deuxième feuille (2).

7. Véhicule selon la revendication 3, **caractérisé par le fait que** la deuxième feuille (2) est fixée à la première feuille (1) au moyen de l'intercalaire de feuilletage (3) qui est en contact adhésif avec la première face principale (11) de la première feuille et la deuxième face principale (22) de la deuxième feuille, et que le moyen d'extraction de la lumière (5) est sur la première face principale (11) de la première feuille (1) et le moyen d'opacification (6) sur la deuxième face principale (12) de la première feuille (2).

8. Véhicule selon la revendication 3, **caractérisé par le fait que** le moyen d'opacification (6) est sur au moins une des faces principales de l'intercalaire de feuilletage (3).

9. Véhicule selon l'une quelconque des revendications précédentes, **caractérisé par le fait que** le moyen d'extraction de la lumière (5) est appliqué sur plusieurs zones de la première face principale (11) ou de la deuxième face principale (12) de la première feuille.

10. Véhicule selon l'une quelconque des revendications précédentes, **caractérisé par le fait que** l'étendue totale de la zone ou des zones couvertes par le moyen d'opacification (6) est supérieure d'au moins 5 %, de préférence d'au moins 10 % et en particulier d'au moins 20 %, à l'étendue totale de la zone ou des zones couvertes par le moyen d'extraction de la lumière (5).

11. Véhicule selon l'une quelconque des revendications précédentes, **caractérisé par le fait que** le moyen d'opacification (6) couvre une zone qui représente au plus 80 %, de préférence au plus 50 % et en particulier au plus 30 % de la surface totale du vitrage.

12. Véhicule selon l'une quelconque des revendications précédentes, **caractérisé par le fait qu'**il comporte en outre une couche réfléchissante, de préférence une couche métallique, située entre le moyen d'extraction de la lumière (5) et le moyen d'opacification (6).

13. Véhicule selon l'une quelconque des revendications précédentes, **caractérisé par le fait que** le moyen d'opacification (6) est une couche opaque, formée d'émail ou d'encre, présentant une densité optique comprise entre 2,5 et 5, de préférence entre 2,8 et 4,5 et en particulier entre 3 et 4.

14. Véhicule selon l'une quelconque des revendications précédentes, **caractérisé par le fait que** le vitrage est un vitrage latéral, de préférence un vitrage latéral fixe, en particulier un vitrage latéral fixe avant.

15. Véhicule selon la revendication précédente, **caractérisé par le fait que** les faces émettrices (41) des sources lumineuses (4) sont en regard de la tranche (13) de la première feuille positionnée vers l'avant du véhicule.

## Patentansprüche

1. Kraftfahrzeug, umfassend wenigstens eine Seitenverglasung, die geeignet ist, als Blinklicht des Fahrzeugs zu funktionieren, wobei die Verglasung umfasst
- eine transparente erste Scheibe (1) aus mineralischem oder organischem Glas, mit einer ersten Hauptseite (11), die zur Außenseite des Fahrzeugs gerichtet ist, einer zweiten Hauptseite (12), die zur Innenseite des Fahrzeugs gerichtet ist, und einer Kante (13),
- eine oder mehrere Lichtquellen (4), vorzugsweise Leuchtdioden, die jeweils eine lichtemittierende Seite (41) gegenüber der Kante (13) aufweisen, wodurch das von den Lichtquellen (4) ausgesandte Licht in der ersten Scheibe (1) zwischen der ersten und der zweiten Hauptseite derer geführt wird, wobei die Lichtquellen (4) derart angeschlossen sind, dass sie das Aussenden eines blinkenden Lichts, das mit dem Blinken der anderen Blinklichter des Fahrzeugs synchronisiert ist, ermöglichen,
- ein Lichtextraktionsmittel (5) in wenigstens einem Bereichs der ersten Hauptseite (11) oder der zweiten Hauptseite (12) der ersten Scheibe oder in der Dicke der ersten Scheibe (1) gelegen, wobei das Extraktionsmittel (5), wenn es durch die Lichtquellen (4) beleuchtet wird, ein oranges Licht aussendet, und
- ein Opazifizierungsmittel (6), das bezogen auf das Lichtextraktionsmittel (5) zur Innenseite des Fahrzeugs gelegen ist und das Lichtextraktionsmittel (5) vollständig verdeckt, um es von der Innenseite des Fahrzeugs aus unsichtbar zu machen.

2. Fahrzeug nach Anspruch 1, **dadurch gekennzeichnet, dass** das Opazifizierungsmittel (6) mit wenigstens einer der Hauptseiten der Scheibe oder einer der Scheiben der Verglasung in Kontakt ist.

3. Fahrzeug nach Anspruch 1 oder 2, **dadurch gekennzeichnet, dass** die Seitenverglasung ferner eine transparente zweite Scheibe (2) aus mineralischem oder organischem Glas umfasst, mit einer ersten Hauptseite (21), welche zur Außenseite des Fahrzeugs gerichtet ist, und einer zweiten Hauptseite (22), welche zur Innenseite des Fahrzeugs gerichtet ist, wobei die zweite Scheibe (2) an der ersten Scheibe (1) mittels einer transparenten verbindenden Zwischenschicht (3) befestigt ist, die in Haftkontakt ist
- entweder mit der zweiten Hauptseite (12) der ersten Scheibe und der ersten Hauptseite (21) der zweiten Scheibe,
- oder mit der ersten Hauptseite (11) der ersten Scheibe und der zweiten Hauptseite (22) der zweiten Scheibe.

4. Fahrzeug nach einem der Ansprüche 1 bis 3, **dadurch gekennzeichnet, dass** das Lichtextraktionsmittel (5) sich auf der zweiten Hauptseite (12) der ersten Scheibe (1) befindet und das Opazifizierungsmittel (6) direkt mit dem Lichtextraktionsmittel (5) in Kontakt ist und es dabei vollständig abdeckt, vorzugsweise dessen Grenze überschreitet.

5. Fahrzeug nach einem der Ansprüche 1 bis 3, **dadurch gekennzeichnet, dass** das Lichtextraktionsmittel (5) sich auf der ersten Hauptseite (11) der ersten Scheibe befindet und das Opazifizierungsmittel (6) sich auf der zweiten Hauptseite (12) der ersten Scheibe befindet.

6. Fahrzeug nach Anspruch 3, **dadurch gekennzeichnet, dass** die zweite Scheibe (2) an der ersten Scheibe (1) mittels der verbindenden Zwischenschicht (3) befestigt ist, die mit der zweiten Seite (12) der ersten Scheibe und der ersten Hauptseite (21) der zweiten Scheibe in Haftkontakt ist, und dass das Lichtextraktionsmittel (5) sich auf wenigstens einer der Hauptseiten (11, 12) der ersten Scheibe (1) befindet und das Opazifizierungsmittel (6) sich auf wenigstens einer der Hauptseiten (21, 22) der zweiten Scheibe (2) befindet.

7. Fahrzeug nach Anspruch 3, **dadurch gekennzeichnet, dass** die zweite Scheibe (2) an der ersten Scheibe (1) mittels der verbindenden Zwischenschicht (3) befestigt ist, die mit der ersten Hauptseite (11) der ersten Scheibe und der zweiten Hauptseite (22) der zweiten Scheibe in Haftkontakt ist, und dass das Lichtextraktionsmittel (5) sich auf der ersten Hauptseite (11) der ersten Scheibe (1) befindet und das Opazifizierungsmittel (6) sich auf der zweiten Hauptseite (12) der ersten Scheibe (1) befindet.

8. Fahrzeug nach Anspruch 3, **dadurch gekennzeichnet, dass** das Opazifizierungsmittel (6) sich auf wenigstens einer der Hauptseiten der verbindenden Zwischenschicht (3) befindet.

9. Fahrzeug nach einem der vorhergehenden Ansprüche, **dadurch gekennzeichnet, dass** das Lichtextraktionsmittel (5) auf mehrere Bereiche der ersten Hauptseite (11) oder der zweiten Hauptseite (12) der ersten Scheibe aufgebracht ist.

10. Fahrzeug nach einem der vorhergehenden Ansprüche, **dadurch gekennzeichnet, dass** die Gesamterstreckung des Bereiches oder der Bereiche, die von dem Opazifizierungsmittel (6) bedeckt sind, um wenigstens 5 %, vorzugsweise um wenigstens 10 % und insbesondere um wenigstens 20 % größer ist als die Gesamterstreckung des Bereiches oder der Bereiche, die von dem Lichtextraktionsmittel (5) bedeckt sind.

11. Fahrzeug nach einem der vorhergehenden Ansprüche, **dadurch gekennzeichnet, dass** das Opazifizierungsmittel (6) einen Bereich bedeckt, der höchstens 80 %, vorzugsweise höchstens 50 % und insbesondere höchstens 30 % der Gesamtfläche der Verglasung ausmacht.

12. Fahrzeug nach einem der vorhergehenden Ansprüche, **dadurch gekennzeichnet, dass** es ferner eine reflektierende Schicht, vorzugsweise eine Metallschicht, umfasst, die zwischen dem Lichtextraktionsmittel (5) und dem Opazifizierungsmittel (6) gelegen ist.

13. Fahrzeug nach einem der vorhergehenden Ansprüche, **dadurch gekennzeichnet, dass** das Opazifizierungsmittel (6) eine von Email oder Farbe gebildete opake Schicht ist, die eine optische Dichte zwischen 2,5 und 5, vorzugsweise zwischen 2,8 und 4,5 und insbesondere zwischen 3 und 4 aufweist.

14. Fahrzeug nach einem der vorhergehenden Ansprüche, **dadurch gekennzeichnet, dass** die Verglasung eine Seitenverglasung, vorzugsweise eine feste Seitenverglasung, insbesondere eine vordere feste Seitenverglasung ist.

15. Fahrzeug nach dem vorhergehenden Anspruch, **dadurch gekennzeichnet, dass** die emittierenden Seiten (41) der Lichtquellen (4) der Kante (13) der ersten Scheibe gegenüberliegen, die zum vorderen Teil des Fahrzeugs positioniert ist.

## Claims

1. An automobile vehicle comprising at least one side glazing unit capable of operating as a direction indicator light of the vehicle, said glazing unit comprising
- a first transparent sheet (1), made of mineral or organic glass, with a first main face (11) directed towards the outside of the vehicle, a second main face (12) directed towards the inside of the vehicle, and an edge face (13),
- one or more light sources (4), preferably light-emitting diodes, each having a light-emission face (41) opposite the edge face (13), the light emitted by the light sources (4) thus being guided into the first sheet (1) between the first and the second main face of the latter, the light sources (4) being connected in such a manner as to allow the emission of a flashing light, synchronized with the flashing of the other direction indicator lights of the vehicle,
- a means for extraction of the light (5) in at least one region of the first main face (11) or of the second main face (12) of the first sheet or situated within the thickness of the first sheet (1), said extraction means (5) emitting, when it is illuminated by the light sources (4), an amber light, and
- a means for rendering opaque (6) situated toward the inside of the vehicle with respect to the means for extraction of the light (5) and totally masking the means for extraction of the light (5) in such a manner as to render it invisible from the inside of the vehicle.

2. The vehicle as claimed in claim 1, **characterized in that** the means for rendering opaque (6) is in contact with at least one of the main faces of the sheet or of one of the sheets of the glazing unit.

3. The vehicle as claimed in either of claims 1 and 2, **characterized in that** the side glazing unit furthermore comprises a second transparent sheet (2), made of mineral or organic glass, with a first main face (21) directed toward the outside of the vehicle, and a second main face (22) directed toward the inside of the vehicle, said second sheet (2) being bonded to the first sheet (1) by means of a transparent interlayer (3) in adhesive contact
- either with the second main face (12) of the first sheet and the first main face (21) of the second sheet,
- or with the first main face (11) of the first sheet and the second main face (22) of the second sheet.

4. The vehicle as claimed in any one of claims 1 to 3, **characterized in that** the means for extraction of the light (5) is on the second main face (12) of the first sheet (1), and the means for rendering opaque (6) is directly in contact with the means for extraction of the light (5) completely covering it, preferably extending beyond the limits of the latter.

5. The vehicle as claimed in any one of claims 1 to 3, **characterized in that** the means for extraction of the light (5) is on the first main face (11) of the first sheet and the means for rendering opaque (6) is over the second main face (12) of the first sheet.

6. The vehicle as claimed in claim 3, **characterized in that** the second sheet (2) is bonded to the first sheet (1) by means of the interlayer (3) which is in adhesive contact with the second face (12) of the first sheet and the first main face (21) of the second sheet, and **in that** the means for extraction of the light (5) is on at least one of the main faces (11, 12) of the first sheet (1) and the means for rendering opaque (6) is on at least one of the main faces (21,22) of the second sheet (2).

7. The vehicle as claimed in claim 3, **characterized in that** the second sheet (2) is bonded to the first sheet (1) by means of the interlayer (3) which is in adhesive contact with the first main face (11) of the first sheet and the second main face (22) of the second sheet, and **in that** the means for extraction of the light (5) is on the first main face (11) of the first sheet (1) and the means for rendering opaque (6) is on the second main face (12) of the first sheet (2).

8. The vehicle as claimed in claim 3, **characterized in that** the means for rendering opaque (6) is on at least one of the main faces of the interlayer (3).

9. The vehicle as claimed in any one of the preceding claims, **characterized in that** the means for extraction of the light (5) is applied on several regions of the first main face (11) or of the second main face (12) of the first sheet.

10. The vehicle as claimed in any one of the preceding claims, **characterized in that** the total extent of the region or of the regions covered by the means for rendering opaque (6) is greater by at least 5 %, preferably by at least 10 % and, in particular, by at least 20 %, than the total extent of the region or of the regions covered by the means for extraction of the light (5).

11. The vehicle as claimed in any one of the preceding claims, **characterized in that** the means for rendering opaque (6) covers a region which represents at the most 80 %, preferably at the most 50 % and, in particular, at the most 30 % of the total surface area of the glazing unit.

12. The vehicle as claimed in any one of the preceding claims, **characterized in that** it furthermore comprises a reflecting layer, preferably a metal layer, situated between the means for extraction of the light (5) and the means for rendering opaque (6).

13. The vehicle as claimed in any one of the preceding claims, **characterized in that** the means for rendering opaque (6) is an opaque layer, formed from enamel or ink, having an optical density in the range between 2.5 and 5, preferably between 2.8 and 4.5 and, in particular, between 3 and 4.

14. The vehicle as claimed in any one of the preceding claims, **characterized in that** the glazing unit is a side glazing unit, preferably a fixed side glazing unit, in particular a fixed front side glazing unit.

15. The vehicle as claimed in the preceding claim, **characterized in that** the emission faces (41) of the light sources (4) are opposite the edge face (13) of the first sheet positioned toward the front of the vehicle.
